# EUROPÄISCHE PATENTSCHRIFT

(11) **EP 1 588 830 B1**
(45) Veröffentlichungstag und Bekanntmachung des Hinweises auf die Patenterteilung: **27.05.2009**
(21) Anmeldenummer: 05100411.7
(22) Anmeldetag: 24.01.2005
(51) Int. Cl.: B29D 30/06, B60C 11/12

(54) **Lamelle zur Verwendung in einer Reifenvulkanisationsform und Verfahren zu deren Herstellung**
Lamella for the use in a tire vulcanisation mold and method for its production
Lamelle pour l'utilisation dans un moule de vulcanisation de pneus et procédé pour la fabrication de celle-ci

(30) Priorität: 23.03.2004 DE 102004014007
(43) Veröffentlichungstag der Anmeldung: 26.10.2005
(73) Patentinhaber: Continental Aktiengesellschaft, 30165 Hannover (DE)
(72) Erfinder: Wenzel, Karsten, 31691, Helpsen (DE)

(56) Entgegenhaltungen:
- EP-A- 0 618 092
- EP-A- 0 934 836
- EP-A- 0 974 439
- EP-A- 1 312 490
- AT-B- 402 181
- US-A- 3 570 571
- US-A- 4 691 431

## Beschreibung

Die Erfindung betrifft eine Lamelle gemäß dem Oberbegriff des Patentanspruchs 1 , eine Reifenvulkanisationsform, sowie ein Verfahren zur Herstellung der Lamelle.

Gattungsgemäße Lamellen sind beispielsweise aus der EP 0 934 836 A2 und der EP 0 974 439 A2 bekannt. Die dort beschriebenen Lamellen sind aus einzelnen Lamellenblechen oder -klingen so zusammengesetzt, dass sich eine sechseck-wabenförmige Struktur ergibt. Eine Mehrzahl von derart verbundenen Lamellenblechen, die entweder einfach ineinander gesteckt oder miteinander verschweißt werden, ergeben die Lamelle, welche in entsprechende Schlitze in die Reifenvulkanisationsform eingeklebt, eingeschweißt oder eingegossen wird. Zweck derartiger Lamellen ist es, ein mehr oder weniger dichtes Netz bzw. Gatter oder Gitter von Feineinschnitten in Profilklötze - insbesondere von Winterreifen - zu erzeugen. Durch diese Feineinschnitte werden Griffkanten erzeugt, welche insbesondere auf schnee- oder eisbedeckten Fahrbahnen benötigt werden, da diese die Wintertauglichkeit des Reifens bestimmen.

Die aus den oben genannten Schriften bekannten Lamellen und die mit diesen hergestellten Reifen haben sich bewährt; ein mit derartigen Lamellen hergestellter Reifen wurde von der Continental AG unter der Handelsbezeichnung "Conti Wintercontact TS 780" millionenfach verkauft.

Dennoch lassen sich Winterreifen und die dazugehörigen Herstellungsmethoden und -werkzeuge verbessern. So wird in einer parallelen deutschen Patentanmeldung mit dem internen Geschäftszeichen 204-035-PDE.1, auf welche voll inhaltlich Bezug genommen wird, ein Winterreifenprofil beschrieben, dessen Profilklötze ein extrem dichtes Netz, Gatter oder Gitter von Feineinschnitten aufweist, wobei diese Feineinschnitte bezüglich ihrer Breite und Tiefe gestaffelt sind, derart, dass Feineinschnitte mit einer normalen Breite von 0,5 bis 0,8 mm tief ausgeführt sind, während extrem feine Einschnitte mit einer Breite von 0,2 bis 0,5 mm, sogenannte Mikrolamellen oder "Micro-Sipes" nur eine geringe Tiefe im Profilklotz aufweisen. Zu den Ausgestaltungen und Vorteilen jener Erfindung wird in der Anmeldung mit dem internen Aktenzeichen 204-035-PDE.1 ausführlich Stellung genommen.

Ein solcher Reifen mit einem derart dichten Netz an Feineinschnitten und Feinsteinschnitten bringt einen erheblichen Fortschritt im Bezug insbesondere auf die Winterreifeneigenschaften mit sich. Jedoch stellt eine derart komplexe Konstruktion den Fachmann auf dem Gebiet der Reifenherstellung und des Reifenformenbaus vor große Probleme. Die in den Schriften EP 0 974 439 A2 und EP 0 934 836 A2 beschriebenen Lamellen zur Herstellung von etwa bienenwabenförmigen Feineinschnitten waren bereits überdurchschnittlich komplex, ließen sich jedoch noch in den Griff bekommen. Das Netz von Feineinschnitten war zwar sehr dicht, jedoch waren die Feinschnitte jeweils gleich breit und gleich tief, so dass der Fachmann es schaffte, Lamellen bereitzustellen, mit denen derartige Feineinschnitt-Strukturen zu fertigen waren. Zu den Lamellenblechen selbst ist anzumerken, dass diese üblicherweise aus Federstahlblech oder aus V2A-Stahl bestehen, welche aus einer Platte geschnitten und dann umgeformt werden. Der Umformungsprozess selbst ist aufgrund des üblicherweise gewählten Materials bereits bestimmten Grenzen unterworfen. Denn die Lamellenbleche müssen bestimmte Eigenschaften hinsichtlich ihrer Härte einerseits und Flexibilität andererseits aufweisen, um dauerhaft den hohen Kräften während des Vulkanisationsprozesses standhalten zu können.

Aus der EP-A-1 312 490 ist es beispielsweise bekannt, einen Lamellenkörper aus einem einzigen sehr langen Blechstreifen derart umzuformen, dass dieser einzige Blechstreifen das Muster einer berührungsfreien Kurve bildet, wobei Schnittpunkte zwischen Schneidkanten vermieden werden sollen und somit den Lamellenkörper für einen gesamten Profilblock bildet. Hierdurch wird ein aufwendiges Zusammensetzen eines Lamellenkörpers aus vielen einzelnen Lamellenblechen vermieden. Jedoch ist das Umformen aufwendig und die Geometrie des Lamellenblechmusters ist begrenzt.

Die US-A-30570 571offenbart einen Lamellenkörper, der aus einem Längsblech und einer Vielzahl an quer zu diesem Längsblech in regelmäßigen Abständen kreuzend angeordneten Querblechen besteht. Die Druckschrift schweigt sich jedoch über die Herstellung dieses Lamellenkörpers aus.

Die Fertigung einer Lamelle zur Schaffung der komplexen Feineinschnitt-Strukturen gemäß der Parallelanmeldung stellt weitaus höhere Anforderungen an den Fachmann, als ihm dies bislang bekannt war. Angemerkt sei an dieser Stelle, dass hier unter "Lamelle" nicht nur ein einzelnes Lamellenblech zu verstehen ist, sondern das komplette Gatter bzw. Gitter, mit denen die Feineinschnitte innerhalb eines von Nuten begrenzten Profilblockes eines Laufstreifenprofils eines Kraftfahrzeugreifens verstanden sein soll bzw. die Gesamtheit wirksamer Schneidkanten bzw. schneidender Stirnflächen innerhalb einer von Stegen begrenzten Ausnehmung der Reifenvulkanisationsform.

Zu den erhöhten Schwierigkeiten zur Schaffung von Feineinschnitten entsprechend der Parallelanmeldung zählen die unterschiedlichen Breiten der Feineinschnitte, was entsprechend unterschiedliche Dicken innerhalb der Lamelle nötig macht. Hinzu kommen unterschiedliche Feineinschnitt-Tiefen, woraus eine analoge Topographie der Lamelle resultiert.

Auf überraschend einfache Art und Weise löst der Erfinder das Problem dadurch, dass die Lamelle einstückig ist und dass sich die Stirnflächen zur Bildung des Gatters, Netzes oder Gitters schneiden.

Die Lamelle, worunter genauer die Gesamtheit wirksamer und einschneidender Stirnflächen dieses Formwerkzeuges zur Bearbeitung eines Profilblockes verstanden wird, ist also nicht mehr aus einer Vielzahl von Blechen oder Klingen zusammengesetzt, sondern besteht aus einem einzigen Stück. Mit dieser Lösung wendet sich der Erfinder ganz bewusst von der jahrzehntenlangen Praxis ab, die Feineinschnitte jeweils durch ein einziges Lamellenblech bzw. durch ein Gitter von Lamellenblech herzustellen. Denn bei einer derartig komplexen Struktur von Feineinschnitten, wie sie in der Parallelanmeldung beschrieben wird, wäre es wirtschaftlich sehr schwierig, durch das Zusammenfügen von Blechen, noch dazu von Blechen unterschiedlichen Dicken und Höhen, zu einer Lamelle zu gelangen, mit der derartige Strukturen geschaffen werden könnten.

In Weiterbildung der Erfindung ist vorgesehen, dass eine Teilmenge der einschneidenden Stirnflächen eine Dicke von 0,1 bis 0,5 mm, vorzugsweise 0,3 mm, aufweist, und dass eine andere Teilmenge der einschneidenden Stirnflächen eine Dicke von 0,4 bis 0,8 mm, vorzugsweise 0,6 mm, aufweist. In weiteren praktischen Ausgestaltungen der Erfindung kann vorgesehen sein, dass die Höhe der Lamelle vom Grund der Reifenvulkanisationsform bis zur einschneidenden Stirnfläche von 0,5 mm bis 8 mm schwankt.

In einer besonders bevorzugten alternativen Ausgestaltungsform wird das Verfahren dadurch ausgeführt, dass die Lamelle aus einem Stahlblock mittels Wasserstrahl herausgeschnitten wird. Letzteres Verfahren der Wasserstrahltechnik mittels abrasiver Zusatzstoffe hat sich als besonders vorteilhaft herausgestellt. Hierbei wird ein Wasserstrahl, welcher mit abrasiven Zuschlagsstoffen versehen sein kann, durch eine Düse mit einem Querschnitt von 0,2 bis 0,5 mm bei etwa 4.000 bar auf das Werkstück in Form eines Stahlblocks beaufschlagt. Mit dem Wasserstrahl kann die Lamelle besonders genau, insbesondere kantengenau, aus dem Stahlblock ausgeschnitten werden, wobei die Vorschubgeschwindigkeiten des Wasserstrahls ein wirtschaftliches Herstellungsverfahren der Lamelle gestatten. Es hat sich gezeigt, dass das Wasserstrahlverfahren besonders kantengenau ist und sich der Wasserstrahl besonders fein und exakt einstellen und über die Oberfläche des Werkstücks führen lässt. Hierdurch ist es möglich, besonders fein und exakt Material vom Werkstück zu entfernen, und zwar so, dass als Endprodukt ein Gatter, Netz oder Gitter übrigbleibt, das dann als einziges Teil in die Reifenvulkanisationsform eingesetzt werden kann.

Ein Vorteil dieses Verfahrens ist ferner, dass sich die Anbindungspunkte mit der Reifenvulkanisationsform verringern lassen. Hierunter ist zu verstehen, dass bislang für jedes einzelne Lamellenblech ein entsprechend geformter Schlitz in die Reifenvulkanisationsform eingeschnitten werden musste, was ebenfalls aufwendig ist. Die neuartige Lamelle kann an einzelnen Punkten an ihrer Unterseite mit Zapfen bzw. Stegen versehen sein, die in entsprechende Ausnehmungen der Form eingesetzt wird. Es ist nun also nicht mehr nötig, die Lamelle vollflächig mit der Reifenvulkanisationsform zu verbinden.

In einer weiteren vorteilhaften Ausgestaltung der Erfindung kann vorgesehen sein, dass die Lamelle seitliche Fortsätze aufweist, welche mit der Reifenvulkanisationsform verbindbar sind. Durch diese Fortsätze läßt sich die Lamelle in die Form eingießen, so dass es unter Umständen gar nicht mehr nötig ist, Schlitze in die Form einzufräsen. In Fortbildung dieser Ausgestaltungsform kann dann vorgesehen sein, dass sich dem Grund der Reifenform und wenigstens einem Teil der unteren Stirnflächen der Lamelle ein Spalt von 0,001 bis 0,1 mm verbleibt. Dieser Spalt kann genutzt werden, um die nötige Entlüftung der Reifenform beim Zusammenfahren der Form auf den Reifenrohling zu gewährleisten bzw. zu unterstützen. Denn üblicherweise finden sich im Bereich der Lamellen eine Vielzahl von durch Ventile verschließbare Entlüftungsbohrungen, deren Form eines Stahlblocks beaufschlagt. Mit dem Wasserstrahl kann die Lamelle besonders genau, insbesondere kantengenau, aus dem Stahlblock ausgeschnitten werden, wobei die Vorschubgeschwindigkeiten des Wasserstrahls ein wirtschaftliches Herstellungsverfahren der Lamelle gestatten. Es hat sich gezeigt, dass das Wasserstrahlverfahren besonders kantengenau ist und sich der Wasserstrahl besonders fein und exakt einstellen und über die Oberfläche des Werkstücks führen lässt. Hierdurch ist es möglich, besonders fein und exakt Material vom Werkstück zu entfernen, und zwar so, dass als Endprodukt ein Gatter, Netz oder Gitter übrigbleibt, das dann als einziges Teil in die Reifenvulkanisationsform eingesetzt werden kann.

Ein Vorteil dieses Verfahrens ist ferner, dass sich die Anbindungspunkte mit der Reifenvulkanisationsform verringern lassen. Hierunter ist zu verstehen, dass bislang für jedes einzelne Lamellenblech ein entsprechend geformter Schlitz in die Reifenvulkanisationsform eingeschnitten werden musste, was ebenfalls aufwendig ist. Die neuartige Lamelle kann an einzelnen Punkten an ihrer Unterseite mit Zapfen bzw. Stegen versehen sein, die in entsprechende Ausnehmungen der Form eingesetzt wird. Es ist nun also nicht mehr nötig, die Lamelle vollflächig mit der Reifenvulkanisationsform zu verbinden.

In einer weiteren vorteilhaften Ausgestaltung der Erfindung kann vorgesehen sein, dass die Lamelle seitliche Fortsätze aufweist, welche mit der Reifenvulkanisationsform verbindbar sind. Durch diese Fortsätze läßt sich die Lamelle in die Form eingießen, so dass es unter Umständen gar nicht mehr nötig ist, Schlitze in die Form einzufräsen. In Fortbildung dieser Ausgestaltungsform kann dann vorgesehen sein, dass sich dem Grund der Reifenform und wenigstens einem Teil der unteren Stirnflächen der Lamelle ein Spalt von 0,001 bis 0,1 mm verbleibt. Dieser Spalt kann genutzt werden, um die nötige Entlüftung der Reifenform beim Zusammenfahren der Form auf den Reifenrohling zu gewährleisten bzw. zu unterstützen. Denn üblicherweise finden sich im Bereich der Lamellen eine Vielzahl von durch Ventile verschließbare Entlüftungsbohrungen, deren Anzahl der Anzahl der Stirnkanten der Lamelle proportional ist. Da die erfindungsgemäße Lamelle eine hohe Anzahl von Stirnkanten aufweist, wären überdurchschnittlich viele Bohrungen/Ventile notwendig. Durch den Spalt zwischen Lamellenboden und Reifenvulkanisationsform-Grund läßt sich die Anzahl notwendiger Bohrungen/Ventile auf ein erträgliches Maß reduzieren.

Weitere Vorteile und Ausgestaltung der Erfindung werden anhand der Beschreibung eines Ausführungsbeispiels der Zeichnung und den Patentansprüchen näher beschrieben. Die Zeichnung zeigt:
- Fig. 1: ein Ausführungsbeispiel einer erfindungsgemäßen Lamelle in räumlicher Darstellung von oben
- Fig. 2: ein zweites Ausführungsbeispiel eines erfindungsgemäßen Lamelle in räumlicher Ansicht
- Fig. 3: ein Teilausschnitt der Lamelle aus Figur 2 von der Seite,
- Fig. 4: ein Teilausschnitt der Lamalle aus Figur 1 in seitlicher Ansicht,
- Fig. 5: ein drittes Ausführungsbeispiel einer erfindungsgemäßen Lamelle in Draufsicht,
- Fig. 6: die Lamelle aus Figur 5 in seitlicher Ansicht,
- Fig. 7: die Lamelle aus Figur 5 von vorne,
- Fig. 8: die Lamelle aus Figur 5 in räumlicher Ansicht, und
- Fig. 9: ein Ausriß einer Reifenvulkanisationsform mit den Lamellen aus Fig. 1 und 2.

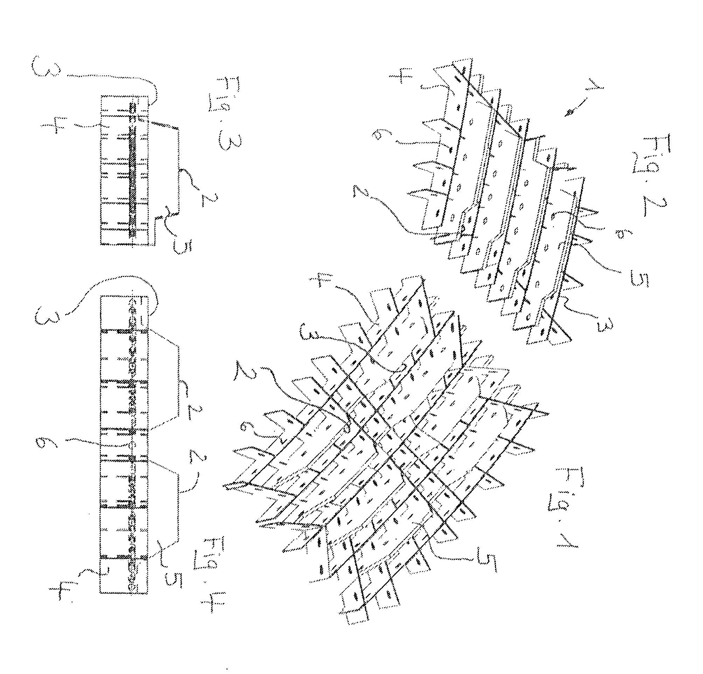

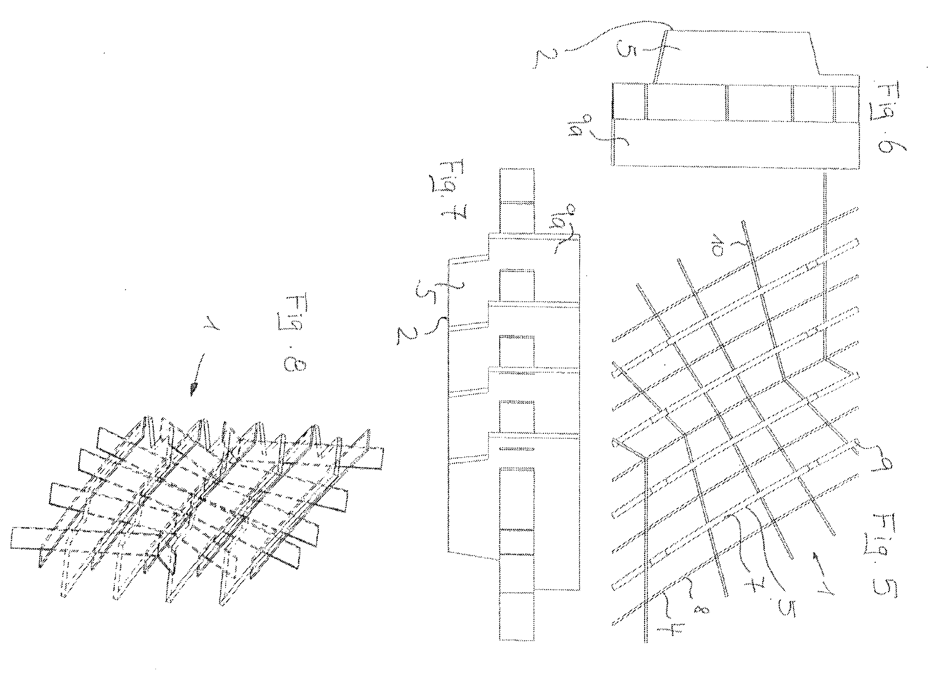

In den Figuren 1 und 2, 3 und 4 sowie 5 sind drei Ausführungsbeispiele einer erfindungsgemäßen Lamelle 1 dargestellt, die Lamellen 1 der Figuren 1 bis 4 in maßstäblicher Darstellung, die Lamelle 1 in Figur 5 im Maßstab 3 : 1. Diese sind jeweils einstückig, wobei die Lamellen 1 jeweils durch geeignete Verfahren, insbesondere durch Wasserstrahltechnik, aus einem Stahlblock herausgeschnitten wurden. Die Lamellen 1 weisen jeweils eine Vielzahl einschneidender Stirnflächen 2, 3 auf, wobei die Dicke der einschneidenden Stirnflächen 2 der normalen Dicke herkömmlicher Lamellenbleche entspricht, also zwischen 0,5 und 0,8 mm beträgt. Die Stirnflächen 3 weisen eine sehr viel geringere Dicke auf, und sind etwa 0,1 bis 0,5 mm dick, vorzugsweise 0,3 mm. Diese Stirnflächen 3 dienen der Erzeugung sogenannter Mikrolamellen im Reifen, wie sie Gegenstand der bereits zitierten parallelen Patentanmeldung sind. Entsprechend weisen die Lamellen 1 der Figuren 1 und 2 in etwa eine Form auf, wie sie den Feineinschnitten der Figuren 6a und 6b genannten parallelen Anmeldung entsprechen. Sie können jedoch auch andere Konfigurationen aufweisen, entsprechend den Figuren 1 bis 5 und 7 der parallelen Patentanmeldung. Bei einer Ausgestaltung entsprechend der Figur 1f der parallelen Patentanmeldung würde die Lamelle 1 also kein Netz bzw. Gitter bilden, sondern ein Gatter weitgehend paralleler Stirnflächen.

Da die Lamellen 1 vorzugsweise dazu genutzt werden sollen, Feineinschnitte in Profilklötze entsprechend der parallelen Anmeldung zu schaffen, sind Kanten 4 und 5 mit entsprechenden Stirnflächen 2, 3 unterschiedlich bezüglich ihrer Höhe, da die schmaleren Stirnflächen 2 mit entsprechenden Kanten 4 nur eine geringe einschneidende Tiefe in den Profilblock erhalten sollen.

Um die Entlüftung beim Schließen der Form und beim Anpressen gegen den Reifenrohling zu verbessern, bzw. überhaupt zu ermöglichen, ist die Lamelle 1 mit einer Vielzahl von Bohrungen 6 versehen. Diese werden nach Abschluss des Heraustrennens der Lamelle 1 aus einem Stahlblock hergestellt, praktischerweise mit dem gleichen Verfahren, mit welchem die Lamelle hergestellt wurde. Es hat sich gezeigt, dass die Technik des Wasserstrahlens auch hierfür besonders geeignet ist.

In denen Figuren 5 bis 8 ist ein drittes Ausführungsbeispiel einer Lamelle 1 dargestellt, welche weitgehend den in den Figuren 1 bis 4 dargestellten Lamellen 1 entspricht. Im Gegensatz zu den Lamellen 1 der Figuren 1 bis 4 ist die Lamelle 1 der Figur 5 in Draufsicht auf die Unterseite mit entsprechenden unteren Stirnflächen 7 und 8 dargestellt, wobei die untere Stirnfläche 7 diejenige der dickeren Kante 5 ist, während die untere Stirnfläche 8 die der dünneren Kante 4 ist. Die Kanten 4,5 weisen Fortsätze 9, 10 auf, welche der Verbindung, vorzugsweise durch Eingießen, mit einer Reifenvulkanisationsform dienen.

In den Figuren 6 und 7 ist die Lamelle 1 aus Figur 5 von der Seite und von vom dargestellt. Die Lamelle weist einen Fortsatz 9a auf, mit dem die Lamelle nach unten verlängert ist. Dieser Fortsatz 9a dient als Pfosten oder Zapfen beim Einbau in die Reifenform. Hierzu wird ein entsprechend geformter Schlitz in die Reifenform eingefräst, wobei auch dieser Schlitz durch einen feinen Wasserstrahl aus dem Material der Reifenform ausgefräst werden kann. Bevorzugt wird es, dass nur die dickeren Kanten 5 einen Fortsatz 9a aufweisen, während die sehr viel dünneren Kanten 4 keinen unteren Fortsatz aufweisen und entweder auf dem Grund der Reifenform aufliegen oder im Abstand zur Oberfläche der Reifenform angeordnet sind.

In Figur 8 ist perspektivisch noch einmal die Lamelle 1 veranschaulicht.

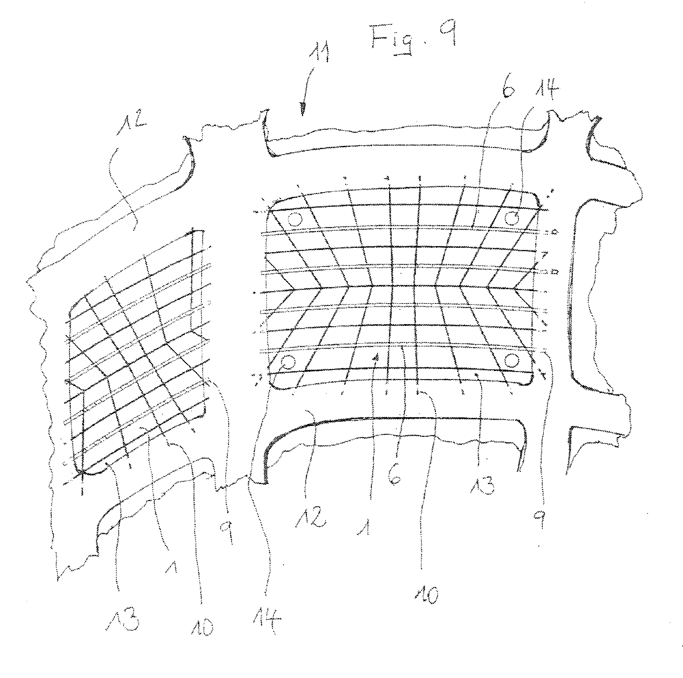

In Figur 9 ist ein Ausriß einer Reifenvulkanisationsform 11 mit eingesetzten Lamellen 1 in Aufsicht auf die radiale Innenseite der Reifenvulkanisationsform 11 dargestellt. Diese weist erhabene Stege 12 zur Formung von Rillen und Nuten im Laufflächenprofil eines Fahrzeugluftreifens auf. Die Stege 12 begrenzen jeweils Ausnehmungen 13, welche in Verbindung mit den Stegen 12 zur Formung eines Profilklotzes des Laufflächenprofils dienen. In der Ausnehmung 13 ist jeweils eine Lamelle angeordnet, wobei diese über die Fortsätze 9, 9a und 10 kraftschlüssig mit der Reifenvulkanisationsform verbunden ist. In der in Figur 9 rechten Ausnehmung 13 sind vier Entlüftungsbohrungen 14 angedeutet, durch welche Luft beim Anpressen der Reifenvulkanisationsform 11 an einen Reifenrohling entweichen kann. Ebenso wie nicht dargestellte Schlitze zum Einfügen der Fortsätze 9a in die Reigfenvulkanisationsform 11 können die Entlüftungsbohrungen 14 mittels Wasserstrahlerodieren geschaffen werden

### Bezugszeichenliste

### (Teil der Beschreibung)

- 1: Lamelle
- 2: Stirnfläche
- 3: Stirnfläche
- 4: Kante
- 5: Kante
- 6: Bohrung
- 7: Untere Stirnfläche
- 8: Untere Stirnfläche
- 9: Fortsatz
- 9a: Fortsatz
- 10: Fortsatz
- 11: Reifenvulkanisationsform
- 12: Steg
- 13: Ausnehmung
- 14: Entlüftungsbohrungen

## Patentansprüche

1. Lamelle zur Verwendung in einer Reifenvulkanisationsform innerhalb des Bereiches, der in einen Profilblock eines Laufstreifens eines Fahrzeugreifens Feineinschnitte einprägt, wobei die Lamelle (1) aus einem Gatter, einem Netz oder einem Gitter von wenigstens sechs einschneidenden Stirnflächen (2, 3) besteht,
**dadurch gekennzeichnet,**
**dass** die Lamelle (1) einstückig ist und dass sich die Stirnflächen zur Bildung des Gatters, Netzes oder Gitters schneiden.

2. Lamelle nach Anspruch 1, **dadurch gekennzeichnet, dass** eine Teilmenge der einschneidenden Stirnflächen (3) eine Dicke von 0,1 bis 0,5 mm, vorzugsweise 0,3 mm, aufweist.

3. Lamelle nach Anspruch 1 oder 2, **dadurch gekennzeichnet, dass** eine Teilmenge der einschneidenden Stirnflächen 2 eine Dicke von 0,4 bis 0,8 mm, vorzugsweise 0,6 mm, aufweist.

4. Lamelle nach einem der vorangegangenen Ansprüche, **dadurch gekennzeichnet, dass** die Höhe von Kanten (4, 5) der Lamelle 0,5 bis 6 mm beträgt.

5. Lamelle nach einem der vorangegangenen Ansprüche, **dadurch gekennzeichnet, dass** Bohrungen in Kanten (4, 5) der Lamelle eingebracht ist.

6. Lamelle nach einem der vorangegangenen Ansprüche, **dadurch gekennzeichnet, dass** die Anzahl einschneidender Stirnflächen (2, 3) zwischen 6 und 60 beträgt.

7. Lamelle nach einem der vorangegangenen Ansprüche, **dadurch gekennzeichnet, dass** das Verhältnis der einschneidenden Stirnflächen (2) großer Dicke zu den Stirnflächen (3) geringer Dicke 2:5 beträgt.

8. Lamelle nach einem der vorangegangenen Ansprüche, **dadurch gekennzeichnet, dass** einstückig an die Lamelle (1) Fortsätze (9, 9a, 10) zur Verbindung mit einer Reifenvulkanisationsform (11) angeformt sind.

9. Lamelle nach einem der vorangegangenen Ansprüche, **dadurch gekennzeichnet, dass** die Fortsätze (9a) an Unterseiten (7;8) der Kanten (4;5) angeformt sind.

10. Reifenvulkanisationsform (11) mit an ihrer radialen Innenseite angeformten Stegen (12), welche Ausnehmungen (13) zur Formung von Profilklötzen eines Fahrzeuglustreifens umschließen, wobei in die Ausnehmung (13) eine Lamelle (1) eingesetzt ist, welche aus einem Gatter, einem Netz oder einem Gitter von wenigstens sechs einschneidenden Stirnflächen (2, 3) besteht,
**dadurch gekennzeichnet,**
**dass** die Lamelle (1) einstückig ist und dass sich die Stirnflächen zur Bildung eines Gatters, Netzes oder Gitters schneiden.

11. Reifenvulkanistaionsform nach Anspruch 10, **dadurch gekennzeichnet, dass** die Lamelle (1) durch Fortsätze (9; 9a; 10) mit der Reifenvulkanisationsform (11) verbunden ist.

12. Reifenvulkanistaionsform nach Anspruch 10 oder 11, **dadurch gekennzeichnet, dass** die Lamelle (1) durch Fortsätze (9a;) mit Stegen (12) der Reifenvulkanisationsform (11) verbunden ist.

13. Reifenvulkanistaionsform nach wenigstens einem der Ansprüche 10 -12, **dadurch gekennzeichnet, dass** untere Stirnflächen (7; 8) der Lamelle (1) im Abstand von 0,001 mm bis 0,1 mm über der Oberfläche der Reifenvulkanisationsform (11) angeordnet sind.

14. Verfahren zur Herstellung einer Lamelle nach wenigstens einem der Ansprüche 1 bis 9, **dadurch gekennzeichnet, dass** die Lamelle (1) aus einem Stahlblock mittels Wasserstrahl herausgeschnitten wird.

## Claims

1. Lamella for use in a tyre vulcanizing mould within the region which stamps sipes into a profile block of a tread rubber of a vehicle tyre, the lamella (1) comprising a grid, a net or a grating of at least six cutting-in end faces (2, 3), **characterized in that** the lamella (1) is in one piece and **in that** the end faces intersect to form the grid, net or grating.

2. Lamella according to Claim 1, **characterized in that** some of the cutting-in end faces (3) have a thickness of 0.1 to 0.5 mm, preferably 0.3 mm.

3. Lamella according to Claim 1 or 2, **characterized in that** some of the cutting-in end faces (2) have a thickness of 0.4 to 0.8 mm, preferably 0.6 mm.

4. Lamella according to one of the preceding claims, **characterized in that** the height of edges (4, 5) of the lamella is 0.5 to 6 mm.

5. Lamella according to one of the preceding claims, **characterized in that** holes are made in edges (4, 5) of the lamella.

6. Lamella according to one of the preceding claims, **characterized in that** the number of cutting-in end faces (2, 3) is between 6 and 60.

7. Lamella according to one of the preceding claims, **characterized in that** the ratio of the cutting-in end faces (2) of large thickness to the end faces (3) of small thickness is 2:5.

8. Lamella according to one of the preceding claims, **characterized in that** extensions (9, 9a, 10) are formed in one piece on the lamella (1) for the connection to a tyre vulcanizing mould (11).

9. Lamella according to one of the preceding claims, **characterized in that** the extensions (9a) are formed on undersides (7; 8) of the edges (4; 5).

10. Tyre vulcanizing mould (11) with webs (12), which are formed on its radially inner side and enclose recesses (13) for the forming of profile blocks of a pneumatic vehicle tyre, a lamella (1) comprising a grid, a net or a grating of at least six cutting-in end faces (2, 3) being placed in the recess (13), **characterized in that** the lamella (1) is in one piece and the end faces intersect to form a grid, net or grating.

11. Tyre vulcanizing mould according to Claim 10, **characterized in that** the lamella (1) is connected to the tyre vulcanizing mould (11) by extensions (9; 9a; 10).

12. Tyre vulcanizing mould according to Claim 10 or 11, **characterized in that** the lamella (1) is connected to webs (12) of the tire vulcanizing mould (11) by extensions (9a).

13. Tyre vulcanizing mould according to at least one of Claims 10-12, **characterized in that** lower end faces (7; 8) of the lamella (1) are arranged at a distance of 0.001 mm to 0.1 mm above the surface of the tire vulcanizing mould (11).

14. Method for producing a lamella according to at least one of Claims 1 to 9, **characterized in that** the lamella (1) is cut out from a steel block by means of a water jet.

## Revendications

1. Lamelle destinée à être utilisée dans un moule de vulcanisation de bandage à l'intérieur de la partie qui creuse de fines entailles dans un bloc profilé d'une bande de roulement d'un bandage pour roue de véhicule, la lamelle (1) étant constituée d'un treillis, d'un réseau ou d'une grille constitués d'au moins six surfaces frontales (2, 3) concourantes,
**caractérisée en ce que**
la lamelle (1) est formée d'une seule pièce et **en ce que** les surfaces frontales se coupent pour former le treillis, le réseau ou la grille.

2. Lamelle selon la revendication 1, **caractérisée en ce qu'**une partie des surfaces frontales (3) concourantes a une épaisseur de 0,1 à 0,5 mm et de préférence de 0,3 mm.

3. Lamelle selon les revendications 1 ou 2, **caractérisée en ce qu'**une partie des surfaces frontales (2) concourantes a une épaisseur de 0,4 à 0,8 mm et de préférence de 0,6 mm.

4. Lamelle selon l'une des revendications précédentes, **caractérisée en ce que** la hauteur des chants (4, 5) de la lamelle est comprise entre 0,5 et 6 mm.

5. Lamelle selon l'une des revendications précédentes, **caractérisée en ce que** des alésages sont ménagés dans les chants (4, 5) de la lamelle.

6. Lamelle selon l'une des revendications précédentes, **caractérisée en ce que** le nombre de surfaces frontales (2, 3) concourantes est compris entre 6 et 60.

7. Lamelle selon l'une des revendications précédentes, **caractérisée en ce que** le rapport entre les surfaces frontales (2) concourantes de grande épaisseur et les surfaces frontales (3) de petite épaisseur est de 2 : 5.

8. Lamelle selon l'une des revendications précédentes, **caractérisée en ce que** des appendices (9, 9a, 10) qui assurent la liaison à un moule (11) de vulcanisation de bandage sont formés d'un seul tenant sur la lamelle (1).

9. Lamelle selon l'une des revendications précédentes, **caractérisée en ce que** les appendices (9a) sont formés sur le côté inférieur (7 , 8) des chants (4 , 5).

10. Moule (11) de vulcanisation de bandage présentant sur son côté radialement intérieur des nervures façonnées (12) qui entourent des creux (13) de formation de blocs profilés d'un bandage pneumatique pour roue de véhicule, une lamelle (1) constituée d'un treillis, d'un réseau ou d'une grille d'au moins six surfaces frontales (2, 3) concourantes étant insérée dans le creux (13),
**caractérisé en ce que**
la lamelle (1) est formée d'un seul tenant et les surfaces frontales se coupent pour former un treillis, un réseau ou une grille.

11. Moule de vulcanisation de bandage selon la revendication 10, **caractérisé en ce que** la lamelle (1) est reliée par des appendices (9 , 9a , 10) au moule (11) de vulcanisation de bandage.

12. Moule de vulcanisation de bandage selon les revendications 10 ou 11, **caractérisé en ce que** la lamelle (1) est reliée au moule (11) de vulcanisation de bandage par des appendices (9a) qui présentent des nervures (12).

13. Moule de vulcanisation de bandage selon au moins l'une des revendications 10 à 12, **caractérisé en ce que** des surfaces frontales inférieures (7 , 8) de la lamelle (1) sont disposées à une distance de 0,001 mm à 0,1 mm au-dessus de la surface du moule (11) de vulcanisation de bandage.

14. Procédé de fabrication d'une lamelle selon au moins l'une des revendications 1 à 9, **caractérisé en ce que** la lamelle (1) est découpée au jet d'eau dans un bloc d'acier.
